**Europäisches Patentamt**

**European Patent Office**

**Office européen des brevets**

(19)

(11) Veröffentlichungsnummer: **0 429 795 A1**

## (12) EUROPÄISCHE PATENTANMELDUNG

(21) Anmeldenummer: **90118558.7**

(22) Anmeldetag: **27.09.90**

(51) Int. Cl.5: **G01F 23/22**, //G01N35/06

Die Bezeichnung der Erfindung wurde geändert (Richtlinien für die Prüfung im EPA, A-III, 7.3).

(30) Priorität: **14.10.89 DE 3934344**

(43) Veröffentlichungstag der Anmeldung: **05.06.91 Patentblatt 91/23**

(84) Benannte Vertragsstaaten: **DE GB IT Patentblatt 00/1**

(71) Anmelder: **BODENSEEWERK PERKIN-ELMER GMBH**
Askaniaweg 4
W-7770 Überlingen/Bodensee(DE)

(72) Erfinder: **Huber, Bernhard**
Hildegardring 42
W-7770 Überlingen(DE)

(74) Vertreter: **Wolgast, Rudolf, Dipl.-Chem. Dr. et al**
Dipl.-Phys. Jürgen Weisse Dipl.Chem. Dr. Rudolf Wolgast Bökenbusch 41 Postfach 11 03 86
W-5620 Velbert 11 Langenberg(DE)

(54) **Steuervorrichtung für die Absenkbewegung des Ansaugrohres bei einem automatischen Probengeber.**

(57) Es gilt, die Absenkbewegung eines Ansaugrohres in ein mit einer Probenflüssigkeit gefülltes Probengefäß bei automatischen Probengebern so zu steuern, daß ein möglichst geringer Teil der Außenfläche des Ansaugrohres durch die Probenflüssigkeit benetzt wird. Das Ansaugrohr ist durch einen Stellantrieb 12 in das Probengefäß 16 absenkbar. Auch das Ansaugrohr selbst kann als Lichtleiter ausgebildet sein. An dem Ansaugrohr ist eine Sensoranordnung mit einem einzigen Lichtleiter 32, Lichtsender 28 und photoelektrischem Empfänger 30 angebracht, welche durch die Reflexe der Flüssigkeitsoberfläche 98 auf das Eintauchen des unteren Endes 34 des Ansaugrohres 10 in die Probenflüssigkeit anspricht. Über die dabei zurückgelegte Weglänge wird die ursprüngliche Füllstandshöhe registriert, die so für die Unterscheidung von Proben benützt werden kann. Der Lichtleiter 32 leitet sowohl das vorlaufende als auch ein reflektiertes, rücklaufendes Lichtbündel. Durch eine elektronische Steuervorrichtung 48 ist das Ansaugrohr 10 über den Stellantrieb 12 bis in eine Stellung vorbewegbar, in welcher es auf einer vorgegebenen kurzen Länge im Bereich des Endes 34 in die Probenflüssigkeit eintaucht. Wenn die Oberfläche 98 der Probenflüssigkeit durch Ansaugen von Probenflüssigkeit über das Ansaugrohr 10 sinkt, folgt das untere Ende des Ansaugrohres 10 gerade diesem Absinken der Oberfläche 98, so daß das Ansaugrohr 10 ständig aber nur mit seinem Ende in der Probenflüssigkeit eingetaucht bleibt.

Fig. 1

## TECHNISCHES GEBIET

Die Erfindung betrifft eine Steuervorrichtung zur Steuerung der Absenkbewegung eines Ansaugrohres in ein mit einer Probenflüssigkeit gefülltes Probengefäß bei automatischen Probengebern bei welchem

(a) das Ansaugrohr durch einen Stellantrieb in das Probengefäß absenkbar ist,

(b) längs des Ansaugrohres lichtleitende Mittel vorgesehen sind,

(c) ein Lichtsender und ein Lichtempfänger vorgesehen sind, wobei durch die lichtleitenden Mittel Licht von dem Lichtsender zu dem probenflüssigkeitsseitigen, unteren Ende des Ansaugrohres geleitet wird, wo das Licht in Richtung auf die Oberfläche der Probenflüssigkeit austritt, und von der Oberfläche der Probenflüssigkeit reflektiertes Licht durch die lichtleitenden Mittel zu dem photoelektrischen Empfänger geleitet wird.

Automatische Probengeber (Autosampler) dienen dazu, aus Probengefäßen Probenflüssigkeit anzusaugen und einem Analysengerät zuzuführen. Das Analysengerät kann dabei ein Atomabsorptions-Spektralphotometer sein. Solche automatischen Probengeber sind aber auch bei anderen Analysengeräten anwendbar, beispielsweise bei Gas- oder Flüssigkeitschromatographen oder Geräten für die klinische Chemie.

## Zugrundeliegender Stand der Technik

Durch die DE-A-19 34 668 und die DE-A-19 44 825 ist eine Dosiervorrichtung für ein Gerät zur Durchführung chemischer Analysen bekannt, bei welchem mittels eines Ansaugrohres Flüssigkeit aus einem Probengefäß angesaugt und nacheinander in verschiedene Reaktionsgefäße dosiert wird. Das Ansaugrohr steht mit einer Spülflüssigkeitspumpe in Verbindung. Nach jedem Ansaug- und Dosiervorgang, der mittels einer ebenfalls mit dem Ansaugrohr verbundenen Dosierpumpe erfolgt, wird restliche Probenflüssigkeit aus dem Ansaugrohr durch Spülflüssigkeit verdrängt, die von der Spülflüssigkeitspumpe in das Ansaugrohr gedrückt wird. Zu Beginn jedes Zyklus ist daher das Ansaugrohr vollständig mit Spülflüssigkeit gefüllt.

Die US-A-4 111 051 beschreibt eine Vorrichtung, welche Probenflüssigkeit aus Probengefäßen in einen Graphitofen für die elektrothermische Atomisierung der Probenflüssigkeit in einem Atomabsorptions-Spektralphotometer dosiert. Die Vorrichtung enthält ein Ansaugrohr. Dieses Ansaugrohr ist mit einer Dosierpumpe sowie über eine Spülflüssigkeitspumpe mit einem Spülflüssigkeitsvorrat verbunden. Zu Beginn jedes Zyklus ist das Ansaugrohr mit Spülflüssigkeit gefüllt. Es wird in ein Probengefäß eingeführt. Mittels der Dosierpumpe wird eine definierte Menge von Spülflüssigkeit aus dem Ansaugrohr angesaugt und dementsprechend eine definierte Menge von Probenflüssigkeit aus dem Probengefäß. Anschließend wird das Ansaugrohr in den Graphitofen eingeführt. Die Dosierpumpe drückt die Probenflüssigkeit aus dem Ansaugrohr heraus in den Graphitofen. Daraufhin erfolgt ein Spülvorgang. Das Ansaugrohr wird in ein Spülgefäß eingeführt. Das Spülgefäß ist ein Überlaufgefäß. Diejenigen Teile des Ansaugrohres, die mit der Probenflüssigkeit in Kontakt gekommen waren, werden in Spülflüssigkeit eingetaucht. Die Spülflüssigkeitspumpe gibt ein Volumen von Spülflüssigkeit über das Ansaugrohr und über das Spülgefäß in einen Abfallbehälter ab. Dabei wird das Ansaugrohr innen und außen gespült. Hierdurch wird Verschleppung von Probe vermieden, wenn das Ansaugrohr anschließend in ein weiteres Probengefäß eingetaucht wird, um die nächste Probe zu dosieren.

Eine ähnliche Anordnung zeigt die US-A-4 068 529.

Es sind auch automatische Probengeber bekannt, bei denen das Ansaugrohr an einem Träger vertikal beweglich geführt und durch einen Schrittmotor auf- und abbewegbar ist. Der Träger wird in einer Horizontalebene so gesteuert, daß er sich nacheinander über die verschiedenen Probengefäße oder über den Einlaß eines Analysengerätes, beispielsweise eines Hochdruck-Flüssigkeitschromatographen bewegt.

Bei diesen bekannten automatischen Probengebern taucht das Ansaugrohr immer bis zu einer vorgegebenen Tiefe in das Probengefäß ein. Normalerweise wird das Ansaugrohr bis zu der tiefsten Stelle des Probengefäßes eingeführt, um mit Sicherheit ein Eintauchen des Ansaugrohres in die Probenflüssigkeit zu gewährleisten. Dadurch wird das Ansaugrohr auch außen auf einer relativ großen Länge mit der Proben flüssigkeit benetzt. Das kann bei hochempfindlichen Messungen wie der AtomabSsorptions-Spektroskopie zu erheblichen Meßfehlern infolge Verschleppung von Probe führen. Es können ja aufeinanderfolgend Proben mit extrem hohen und Proben mit extrem niedrigen Konzentrationen eines bestimmten gesuchten Elements analysiert werden. Dieses Problem kann durch den geschilderten Spülvorgang verringert werden. Ein solcher Spülvorgang erfordert jedoch zusätzliche Zeit. Außerdem kann auch eine Verschleppung über das Spülgefäß erfolgen.

Es sind daher Vorrichtungen bekannt, durch welche die Eintauchtiefe des Dosierrohres oder einer Pipette in Flüssigkeiten gemessen und geregelt werden kann.

Es ist bekannt, die Flüssigkeitsoberfläche pneumatisch zu erfassen. Durch die Flüssigkeitsoberfläche wird eine Luftaustrittsöffnung eines Niveaufühlers bei Annäherung des Niveaufühlers an die Flüssigkeitsoberfläche gedrosselt. Das bewirkt einen Druckanstieg, der als Steuersignal dient. Beispiele für solche pneumatischen Niveaufühler sind die EP-A-0 273 128 und die DE-C-3 039 475.

Es ist weiterhin bekannt, eine Pipette oder ein Dosierrohr in mechanische Schwingungen zu versetzen. Als Steuersignal dienen dabei die durch einen Fühler abgegriffenen Schwingungsamplituden. Diese Schwingungsamplituden fallen ab, wenn die Pipette oder das Dosierrohr in die Flüssigkeit eintaucht. Dann erfolgt nämlich eine Dämpfung der Schwingungen. Ein Beispiel für einen solchen Niveaufühler zeigt die DE-C-3 614 961.

Es sind weiterhin Niveaufühler an Pipetten oder dergl. bekannt, die auf die elektrische Leitfähigkeit der Flüssigkeit ansprechen. Beispiele für solche Anordnungen sind die DE-C-3 219 251, die DE-A-3 905 622, die DE-A-3 909 515 und die DE-A-3 839 896.

Die US-A-4 736 638 beschreibt eine Anordnung, bei welcher ein Drehtisch eine elektrisch leitende Platte enthält, auf der die Probengefäße angeordnet sind. Mit der Platte ist ein Niederfrequenzoszillator verbunden, der ein elektrisches Feld erzeugt. Ein mit dem Dosierrohr verbundener Detektor spricht auf dieses elektrische Feld an. Wenn das Dosierrohr die Flüssigkeitsoberfläche erreicht, wird ein Ausgangssignal erzeugt, welches die Abwärtsbewegung des Dosierrohres unterbricht.

Es sind zur Erfassung der Oberfläche von Flüssigkeiten bei Dosierrohren oder dergl. auch optische Niveaufühler bekannt.

Die EP-A-0 250 671 zeigt ein Dosierrohr und einen mit dem Dosierrohr verbundenen Detektor. Der Detektor enthält einen Lichtsender und einen Lichtempfänger. Abbildungsoptiken erzeugen einen V-förmigen Strahlengang. Wenn das Bild des Lichtsenders auf der Flüssigkeitsoberfläche liegt, fällt reflektiertes Licht auf den Lichtempfänger und erzeugt ein Signal.

Die DE-C-3 113 248 beschreibt eine Vorrichtung zur Entnahme von Flüssigkeiten aus Behältern im Analysenmaßstab mit einem Dosierrohr, das von oben her in die zu entnehmende Flüssigkeit eintaucht. Als Niveaufühler ist ein Bündel von Lichtleitfasern an dem Dosierrohr angebracht. Die Lichtleitfasern enden um die Eintauchtiefe oberhalb des unteren Endes des Dosierrohres. Ein Teil dieser Lichtleitfasern ist mit einem Lichtsender verbunden und ein Teil mit einem Lichtempfänger.

Die DE-C-3 149 211 zeigt eine Anordnung, bei welcher eine bestimmte Eintauchtiefe des Dosierrohres mittels einer quer durch das Probengefäß verlaufenden Lichtschranke signalisiert wird.

Die DE-A-3 619 870 betrifft ein Reflektometer zum Untersuchen von Glasfasern, mit einem Lichtsender, einer Koppelfaser und einem photoelektrischen Empfänger. Das Licht tritt von dem Lichtsender durch die Stirnfläche der Koppelfaser in die Koppelfaser ein. Das reflektierte Licht wird von der Koppelfaser zurückgeleitet und über einen teildurchlässigen Spiegel aus der Koppelfaser ausgekoppelt und auf den photoelektrischen Empfänger reflektiert.

**Offenbarung der Erfindung**

Der Erfindung liegt die Aufgabe zugrunde, bei automatischen Probengebern die Gefahr einer Verschleppung von Probe zu verringern. Weiterhin soll durch die Erfindung die für die Dosierung erforderliche Zeit verringert und damit die Analysenfrequenz erhöht werden. Das soll mit einem möglichst einfach aufgebauten Niveaufühler erreicht werden.

Erfindungsgemäß wird diese Aufgabe mit einer Steuervorrichtung der eingangs genannten Art dadurch gelöst, daß die lichtleitenden Mittel von einem einzigen Lichtleiter gebildet sind, in welchen das Licht von dem Lichtsender in Richtung zu dem unteren Ende des Ansaugrohres hin einkoppelbar ist und aus welchem von dem unteren Ende des Ansaugrohres her zurücklaufendes, an der Oberfläche der Probenflüssigkeit reflektiertes Licht zu dem photoelektrischen Empfänger hin auskoppelbar ist.

Das Ansaugrohr wird somit nicht bis zu einer fest vorgegebenen Tiefe in das Probengefäß eingeführt. Vielmehr wird das Ansaugrohr nur soweit in das Probengefäß hineinbewegt, daß es eine vorgegebene geringe Tiefe in die Probenflüssigkeit eintaucht, gerade soweit, daß ein einwandfreies Ansaugen von Probenflüssigkeit gewährleistet ist. Damit kommt nur ein sehr kleiner Teil der Außenfläche des Ansaugrohres mit der Probenflüssigkeit in Berührung. Es bleibt entsprechend weniger Probenflüssigkeit auf der Außenfläche des Ansaugrohres haften. Das reduziert die Gefahr einer Verschleppung. Es kann unter Umständen auf Spülvorgänge verzichtet werden derart, daß erst nach einer Mehrzahl von Analysen ein Spülvorgang eingeschaltet wird.

Durch Verwendung eines einzigen Lichtleiters für das vorlaufende Lichtbündel und für das reflektierte Lichtbündel ergeben sich verschiedene Vorteile:

Die Anordnung mit Ansaugrohr und einem einzigen Lichtleiter wird wesentlich schmaler als die bekannte Anordnung mit einem Kranz von Lichtleitern, getrennt für vorlaufendes und reflektiertes Lichtbündel. Das ist wichtig, wenn das Ansaugrohr, sei es zur Aufnahme, sei es zur Abgabe der Probe, in enge Gefäße oder enge Öffnungen eingeführt werden muß, beispielsweise in die Eingabeöffnung eines Graphitofens für die elektrothermische Atomisierung der Probe.

Es ist auch manchmal erforderlich, das Ansaugrohr weiter als normal in ein Probengefäß einzutauchen, beispielsweise um eine Oberflächenschicht zu durchstoßen und Probe aus einem unter dieser Oberflächenschicht liegendem Bereich anzusaugen. In einem solchen Fall erhöht jeder zusätzliche Lichtleiter die Gefahr, daß sich Probenflüssigkeit zwischen Ansaugrohr und Lichtleiter festsetzt und zu Verschleppung von Probenflüssigkeit führt. Es ist daher günstig, wenn die Sensoranordnung nur einen Lichtleiter enthält.

Ausführungsbeispiele der Erfindung sind nachstehend unter Bezugnahme auf die zugehörigen Zeichnungen näher erläutert.

## Kurze Beschreibung der Zeichnungen

Fig.1 ist eine schematische Darstellung und zeigt ein Ansaugrohr mit einem Probengefäß und einer Sensoranordnung sowie die zugehörige Steuerung.
Fig.2 ist ein Flußdiagramm und veranschaulicht die Steuerung des Ansaugrohres in Abhängigkeit von den Signalen der Sensoranordnung.
Fig.3 zeigt eine abgewandelte Ausführung, bei welcher das Ansaugrohr selbst die lichtleitenden Mittel der Sensoranordnung bildet.
Fig.4 zeigt ein Flußdiagramm ähnlich Fig.2 für die Anordnung nach Fig.3.

## Bevorzugte Ausführungen der Erfindung

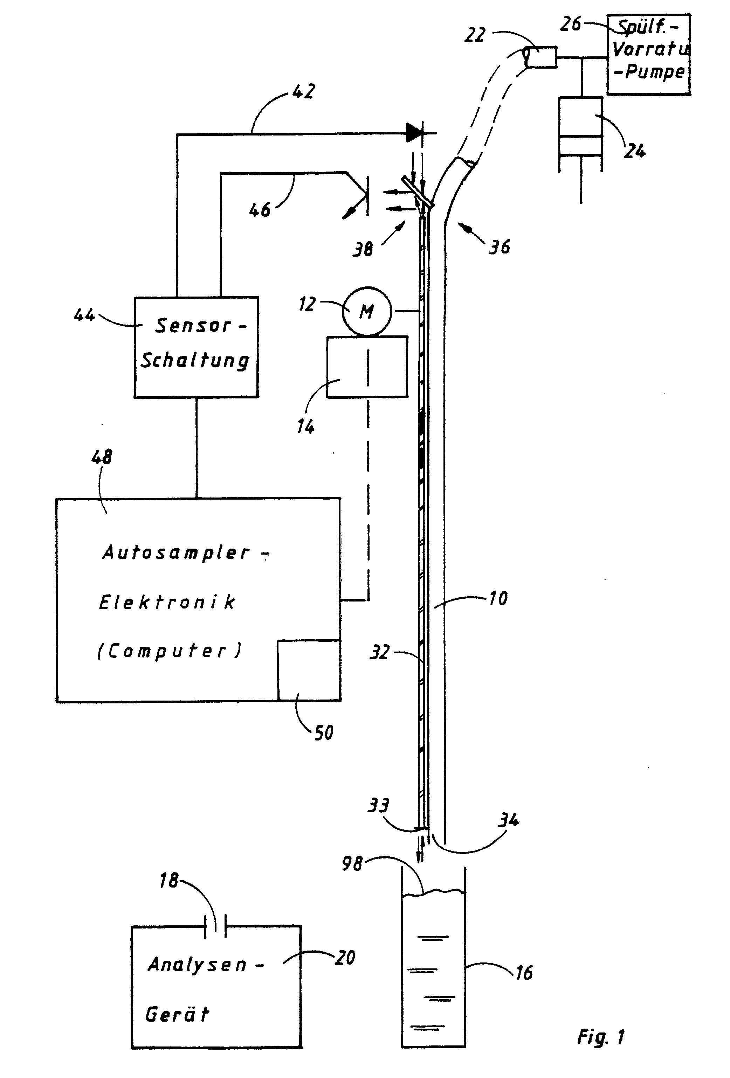

Ein Ansaugrohr 10 ist durch einen Schrittmotor 12 auf- und abbewegbar. Der Schrittmotor 12 sitzt auf einem Träger 14, der in einer waagerechten Ebene (senkrecht zur Papierebene von Figur t1) kontrolliert bewegbar ist. Das Ansaugrohr 10 kann auf diese Weise über ein Probengefäß 16 oder über den Einlaß 18 eines Analysengeräts 20 verfahren werden. Das Ansaugrohr 10 ist über eine flexible Schlauchverbindung 22 mit einer Probenpumpe 24 sowie weiterhin mit einem Spülflüssigkeitsvorrat und einer Spülflüssigkeitspumpe verbunden, die in Fig.1 durch einen Block 26 dargestellt sind. Das Ansaugrohr 10 ist zu Beginn eines Zyklus mit einer Spülflüssigkeit gefüllt. Gegebenenfalls ist ein kleines Luftvolumen eingesaugt worden, welches Spülflüssigkeit und Probenflüssigkeit trennt. Das Ansaugrohr 10 wird über das Probengefäß 16 geführt und von dem Schrittmotor 12 in das Probengefäß 16 abgesenkt. Das Ansaugrohr 10 taucht dabei in die Probenflüssigkeit ein. Die Probenpumpe 24 saugt ein vorgegebenes Volumen von Spülflüssigkeit an. Dementsprechend wird an dem unteren Ende des Ansaugrohres 10 ein entsprechendes Volumen von Probenflüssigkeit aus dem Probengefäß 16 angesaugt. Im Anschluß daran wird das Ansaugrohr 10 über den Einlaß 18 des Analysengeräts 20 gefahren und in den Einlaß 18 abgesenkt. Die Probenpumpe 24 drückt jetzt eine dem angesaugten Volumen von Probenflüssigkeit entsprechendes Volumen von Spülflüssigkeit in das Ansaugrohr 10. Dadurch wird die angesaugte Probenflüssigkeit in das Analysengerät 20 abgegeben. Das Analysengerät kann ein Atomabsorptions-Spektralphotometer mit einem Graphitofen zur elektrothermischen Atomisierung der Probe sein. Die Probenflüssigkeit wird dabei in den Graphitofen abgegeben.

Das ist ein bekannter Aufbau eines automatischen Probengebers (Autosamplers) und daher hier nicht im einzelnen beschrieben.

Es soll erreicht werden, daß das Ansaugrohr 10 jeweils nur auf einer bestimmten, kurzen Länge in die Probenflüssigkeit im Probengefäß 16 eintaucht. Zu diesem Zweck sind an dem Ansaugrohr 10 Sensormittel vorgesehen, welche auf das Eintauchen des Ansaugrohres 10 in die Probenflüssigkeit im Probengefäß 16 ansprechen. Diese Sensormittel enthalten einen Lichtsender 28 und einen photoelektrischen Empfänger 30, die beide am oberen Ende des Ansaugrohres 10 angeordnet sind. Von dem Lichtsender 28 ist ein Lichtleiter in Form einer lichtleitenden Faser 32 längs des Ansaugrohres 10 zum unteren Ende 34 des Ansaugrohres 10 geführt. Der Lichtleiter 32 endet in einem bestimmten, kurzen Abstand oberhalb des unteren Endes 34 in einem Lichtleiterende 33. Der Lichtsender 28 liegt im Abstand vor der oberen Stirnfläche des Lichtleiters 32. Zwischen dem Lichtsender 28 und dieser Stirnfläche ist ein unter 45° zur Achse des Lichtleiters geneigter teildurchlässiger Spiegel 38 angeordnet. Ein Lichtbündel fällt von dem Lichtsender durch den teildurchlässigen Spiegel 38 hindurch auf die Stirnfläche des Lichtleiters 32 und wird in dem Lichtleiter 32 zu dessen unterem Ende geleitet. Ein in den Lichtleiter 32 hinein von dessen unterer Stirnfläche her reflektiertes Lichtbündel tritt an der oberen Stirnfläche des Lichtleiters 32 aus und wird von dem teildurchlässigen Spiegel 38 auf den seitlich angeordneten, photoelektrischen Empfänger 30 gelenkt.

Der Lichtsender 28 ist über eine flexible elektrische Leitung 42 mit einer Sensorschaltung 44 verbunden. Ebenso ist der photoelektrische Empfänger 30 über eine flexible, elektrische Leitung 46 mit der Sensorschaltung 44 verbunden. Das Ausgangssignal der Sensorschaltung 44 beaufschlagt eine Steuerelektronik 48, die von einem Rechner gebildet ist.

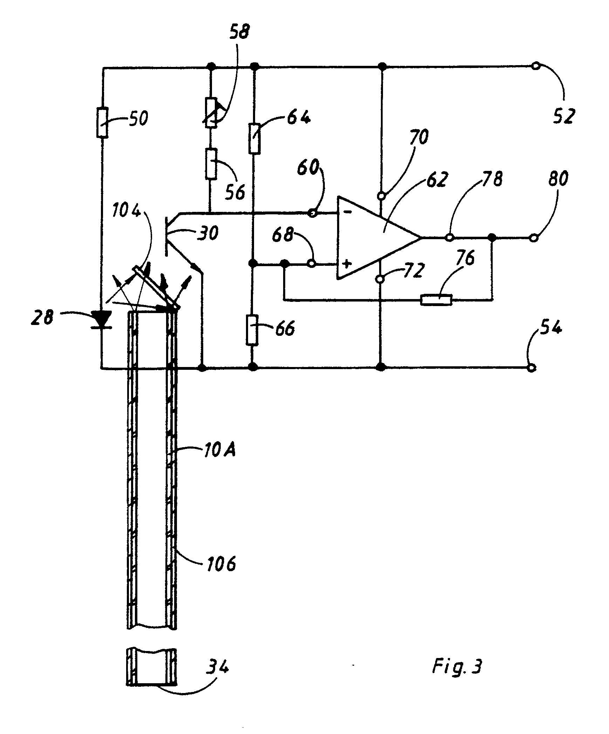

Die Sensorschaltung ist unten im Zusammenhang mit Fig.3 im einzelnen beschrieben.

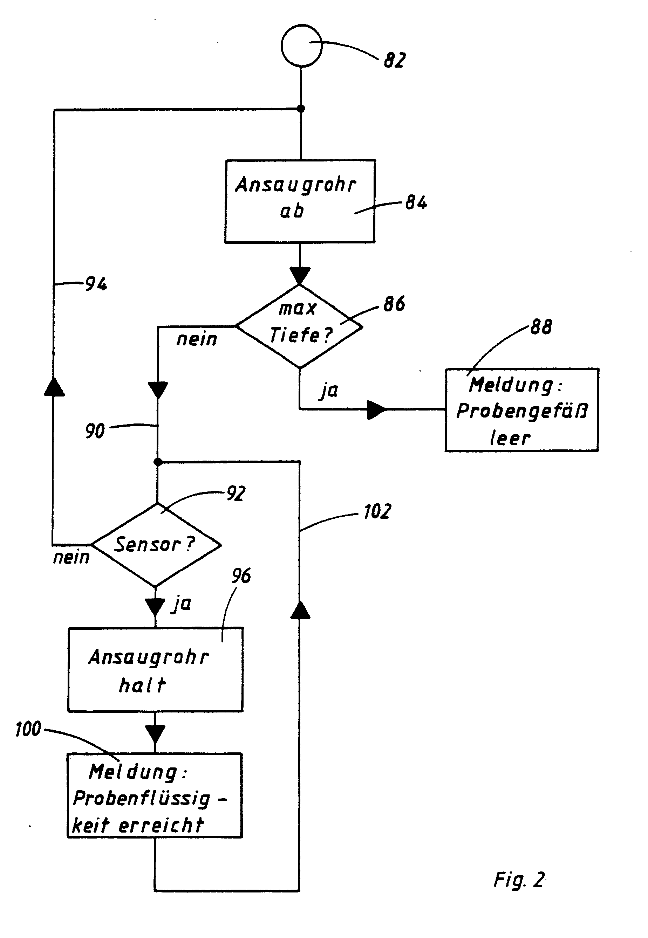

Die Wirkungsweise der Steuerelektronik 48 ist in Fig.2 anhand eines Flußdiagramms dargestellt. Ein Kreis 82 markiert den Anfang des Programms. Dann wird durch den Schrittmotor 12 das Ansaugrohr 10 um ein bestimmtes Stück abgesenkt. Das ist durch Block 84 angedeutet. Nach diesem Schritt erfolgt eine Prüfung, ob mit dem Schritt die maximal zulässige Tiefe erreicht ist, das Ansaugrohr 10 also dicht über dem Boden des Probengefäßes 16 steht. Diese Prüfung ist durch den Rhombus 86 im Flußdiagramm dargestellt. Verläuft diese Prüfung positiv, ist also die maximale Tiefe erreicht, dann erfolgt eine Meldung "Probengefäß leer". Das ist durch Block 88 dargestellt. Das Ansaugrohr 10 wird dann aus dem Probengefäß 16 herausgezogen. Es kann dann zu einem anderen Probengefäß geführt werden. Ist das Ergebnis der Prüfung jedoch negativ, dann verläuft das Flußdiagramm über Zweig 90 zu einer neuen Prüfung, nämlich ob der Sensor angesprochen hat. Das bedeutet eine Prüfung, ob das Signal am Ausgang 80 der Sensorschaltung 44 ein vorgegebenes Niveau von über den Lichtleiter 32 zurücklaufendem Licht signalisiert. Diese Prüfung ist durch Rhombus 92 dargestellt. Ist das Ergebnis der Prüfung negativ, dann läuft das Flußdiagramm über eine Schleife 94 zurück zu dem Rechteck 84. Es wird also ein weiterer Abwärtsschritt des Ansaugrohres 10 eingeleitet.

Ist das Ergebnis der Prüfung positiv, so wird der Antrieb des Ansaugrohres durch den Schrittmotor 12 unterbrochen. Das ist durch das Rechteck 96 dargestellt. Weiterhin erfolgt eine Meldung, daß bei einer bestimmten Tiefe die Oberfläche 98 der Probenflüssigkeit erreicht ist. Das ist durch das Rechteck 100 dargestellt. Das Flußdiagramm verläuft dann über Schleife 102 zurück zu dem Eingang des Rhombus 92, also zu der Prüfung, ob der Sensor angesprochen hat oder nicht.

Anhand dieser Tiefe könnte ein "intelligentes" Analysensystem erkennen, ob es sich z. B. um eine Probe, einen Standard oder eine Null-Lösung handelt. So könnten z. B. Probengefäße immer nur zu einem Viertel gefüllt sein, das Analysensystem erkennt an diesem Füllstand, daß es sich um eine Probe und nicht um einen Standard handelt.

Es wird nämlich jetzt, gesteuert von der elektronischen Steuervorrichtung 48, in nicht dargestellter Weise der Ansaugvorgang durch die Probenpumpe 24 eingeleitet. Damit sinkt die Oberfläche 98 der Probenflüssigkeit, weil ja Probenflüssigkeit aus dem Probengefäß 16 abgesaugt wird. Wenn dabei die Probenflüssigkeit soweit absinkt, daß der Sensor nicht mehr anspricht, dann wird über Schleife 94 und Rechteck 84 eine weitere Absenkbewegung des Ansaugrohres 10 eingeleitet. Das Ansaugrohr wird somit der absinkenden Probenflüssigkeit nachgeführt.

Auf diese Weise wird das Ansaugrohr 10 durch den Schrittmotor 12 abgesenkt, so lange bis das von dem Lichtsender 28 über den Lichtleiter 32 auf die Oberfläche 98 der Probenflüssigkeit geleitete Licht nach Reflektion an der Oberfläche 98 wieder über den Lichtleiter 32 an dem photoelektrischen Empfänger 30 ein solches Signal erzeugt, daß die Sensorschaltung 44 anspricht. Dann wird durch die elektronische Steuervorrichtung 48 der Schrittmotor 12 abgeschaltet. Dieses Ansprechen des photoelektrischen Empfängers 30 und der Sensorschaltung 44 erfolgt erst bei einer solchen Annäherung des unteren Lichtleiterendes 33 an die Oberfläche 98 der Probenflüssigkeit, daß der unterhalb des Lichtleiterendes 33 verlaufende Abschnitt des Ansaugrohres 10 mit dem Ende 34 sicher in die Probenflüssigkeit eingetaucht ist. Die Steuerung erfolgt jedoch so, daß das Ansaugrohr 10 nicht weiter in die Probenflüssigkeit hineingetaucht wird, so daß nur ein relativ geringer Teil der Außenfläche des Ansaugrohres 10 von der Probenflüssigkeit benetzt wird. Dadurch werden die Probleme bei der Reinigung des Ansaugrohres 10 und die Gefahr einer Verschleppung vermindert.

Bei der Ausführung nach Fig.3 dient das Ansaugrohr 10A selbst als Lichtleiter, durch den sowohl das Licht von dem Lichtsender 28 zu dem unteren Ende 34 des Ansaugrohres 10A geleitet wird als auch das von der Oberfläche der Probenflüssigkeit zurückgeworfene Licht auf den photoelektrischen Empfänger 30 geleitet wird. Zu diesem Zweck besteht das Ansaugrohr 10A aus einem lichtdurchlässigem Material. Das Ansaugrohr 10A ist von einem Mantel 106 aus einem Material von geringerem Brechungsindex umgeben. Das erhöht die Stabilität des Ansaugrohres 10A. Die Ein-und Auskoppelung des Lichts erfolgt über einen teildurchlässigen Spiegel 104.

In Fig.3 ist die Sensorschaltung im einzelnen dargestellt. Der Lichtsender 28 ist von einer Leuchtdiode (LED) gebildet, die über einen Widerstand 50 an einer Versorgungsgleichspannung anliegt. Die Versorgungsgleichspannung wird über Klemmen 52 und 54 zugeführt. Der photoelektrische Empfänger 30 ist von einem Phototransistor gebildet, auf den das von dem den Lichtleiter bildenden Ansaugrohr 10A zurückgeleitete Licht fällt. Der Phototransistor liegt über Kollektorwiderstände 56 und 58 ebenfalls an der Versorgungsgleichspannung. Der Widerstand 58 ist zu Justagezwecken einstellbar.

Die Kollektorspannung des Phototransistors liegt an der invertierenden Eingangsklemme 60 eines Operationsverstärkers 62. Eine Referenzspannung wird an einem Spannungsteiler abgegriffen, der von zwei Widerständen 64 und 66 gebildet ist. Diese Referenzspannung liegt an einer nicht-invertierenden Eingangsklemme 68 des Operationsverstärkers 62. Der Spannungsteiler 64, 66 liegt ebenfalls an der Versorgungsgleichspannung. Auch der Operationsverstärker 62 wird über Klemmen 70 und 72 von der Versor gungsgleichspannung gespeist. Mit 76 ist ein Gegenkopplungswiderstand bezeichnet. Der Gegenkopplungswiderstand 76 liegt in einem Gegenkopplungszweig, welcher vom Ausgang des Operationsverstärkers 62 zu dem nicht-invertierenden Eingang 68 geführt ist. Der Ausgang des Operationsverstärkers 62 an einer Ausgangsklemme 78 bildet den Ausgang der Sensorschaltung. Dieser Ausgang wird an einer Ausgangsklemme 80 abgegriffen. Der Ausgang an der Ausgangsklemme 80 geht in einen von zwei Zuständen, je nachdem, ob das auf den photoelektrischen Empfänger 30 zurückgeleitete Licht einen vorgegebenen Schwellwert überschreitet oder nicht. Abhängig davon ist die an dem invertierenden Eingang 60 des Operationsverstärkers 62 anliegende Signalspannung größer oder kleiner als die an dem nicht-invertierenden Eingang 68 anliegenden Referenzspannung. Das Ausgangssignal am Ausgang 80 ist auf die Steuerelektronik aufgeschaltet. Die Steuerelektronik steuert wie in Fig.1 die Auf- und Abbewegung des Ansaugrohres 10A über einen ( in Fig.3 nicht dargestellten) Stellmotor.

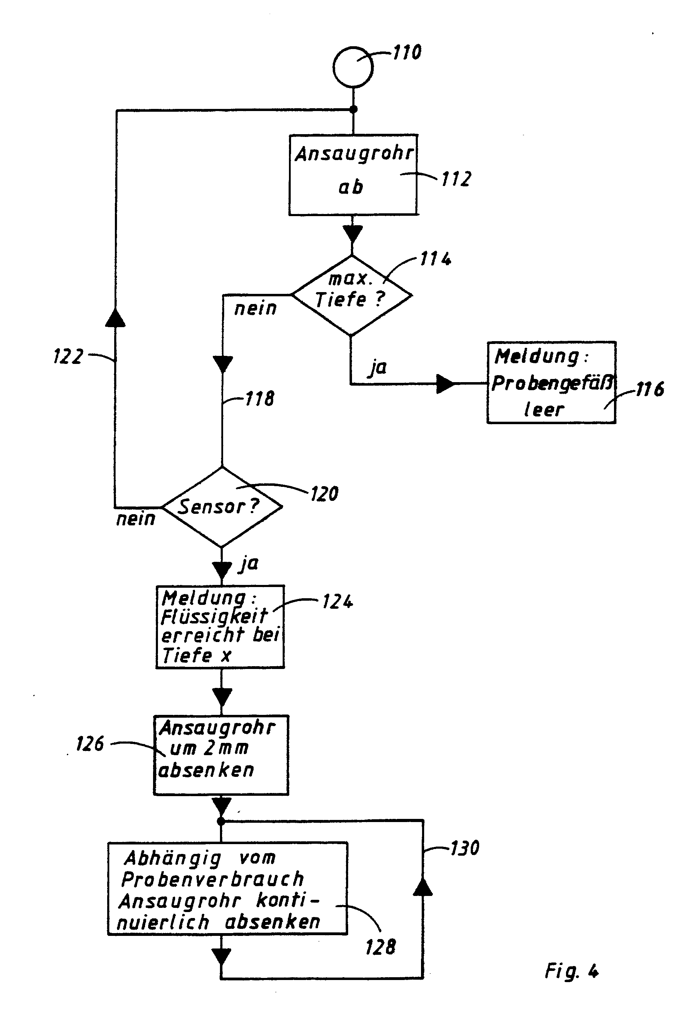

In Fig.4 ist ein Flußdiagramm dargestellt, das die Wirkungsweise der Steuerelektronik bei der Ausführung nach Fig.3 veranschaulicht. Da das Ansaugrohr selbst als Lichtleiter dient, kann nicht das Ende des Lichtleiters gegenüber dem unteren Ende des Ansaugrohres zurückgesetzt sein, um ein definiertes Eintauchen des Endes in die Probenflüssigkeit um einen durch das Zurücksetzen des Endes des Lichtleiters bestimmten Betrag zu erreichen. Das wird daher gemäß Fig.4 durch ein geeignetes Steuerprogramm ermöglicht.

Ein Kreis 110 markiert den Anfang des Programms. Dann wird durch den Schrittmotor 12 das Ansaugrohr 10A um ein bestimmtes Stück abgesenkt. Das ist durch Block 112 angedeutet. Nach diesem Schritt erfolgt eine Prüfung, ob mit dem Schritt die maximal zulässige Tiefe erreicht ist, das Ansaugrohr 10A also dicht über dem Boden des Probengefäßes 16 steht. Diese Prüfung ist durch den Rhombus 114 im Flußdiagramm dargestellt. Verläuft diese Prüfung positiv, ist also die maximale Tiefe erreicht, dann erfolgt eine Meldung "Probengefäß leer". Das ist durch Block 116 dargestellt. Das Ansaugrohr 10A wird dann aus dem Probengefäß 16 herausgezogen. Es kann dann zu einem anderen Probengefäß geführt werden. Ist das Ergebnis der Prüfung jedoch negativ, dann verläuft das Flußdiagramm über Zweig 118 zu einer neuen Prüfung, nämlich ob der Sensor angesprochen hat. Das bedeutet, eine Prüfung, ob das Signal am Ausgang 80 der Sensorschaltung ein vorgegebenes Niveau von über das den Lichtleiter bildende Ansaugrohr 10A zurücklaufendem Licht signalisiert. Diese Prüfung ist durch Rhombus 120 dargestellt. Ist das Ergebnis der Prüfung negativ, dann läuft das Flußdiagramm über eine Schleife 122 zurück zu dem Rechteck 112. Es wird also ein weiterer Abwärtsschritt des Ansaugrohres 10 eingeleitet.

Insoweit stimmt das Steuerprogramm von Fig.4 mit dem Steuerprogramm von Fig.2 überein.

Nach Fig.4 erfolgt nun eine Meldung, daß bei einer bestimmten Tiefe die Probenflüssigkeit erreicht ist. Das ist durch Block 124 dargestellt. Anschließend erfolgt eine weitere Absenkung des Ansaugrohres um eine vorgegebene Strecke, beispielsweise um 2 mm. Es ist dann sichergestellt, daß das untere Ende 34 des Ansaugrohres 10A sicher in die Probenflüssigkeit eingetaucht ist. Diese weitere Absenkung ist in Fig.4 durch Block 126 dargestellt. Wenn nun Probenflüssigkeit angesaugt wird, dann senkt sich der Flüssigkeitsspiegel der Probenflüssigkeit.

Die Geschwindigkeit dieser Senkung des Flüssigkeitsspiegels ist aber bekannt. Diese Geschwindigkeit ergibt sich aus der Hubgeschwindigkeit der üblicherweise von einem Schrittmotor angetriebenen Probenpumpe 24 (Fig.1) und dem Verhältnis der Querschnittsflächen von Probenpumpe 24 und Probengefäß 16. Die weitere kontinuierliche Absenkung des Ansaugrohres 10A kann daher in Abhängigkeit vom Hub der Probenpumpe 24 erfolgen. Das ist in Fig.4 durch den Block 128 mit der Schleife 130 dargestellt.

Aus der Meldung, daß das Ansaugrohr 10A den Flüssigkeitsspiegel bei einer bestimmten Tiefe erreicht hat, kann auf das im Probengefäß vorhandene Restvolumen geschlossen werden. Es kann dadurch erkannt werden, ob dem Probengefäß 16 noch die kommandierte Menge an Probenflüssigkeit entnommen werden kann.

Es ist auch möglich, die von Block 124 gelieferte Tiefe beim Erreichen des Flüssigkeitsspiegels beim ersten Eintauchen als Kriterium dafür zu wählen, ob es sich bei der Probenflüssigkeit um eine Eichlösung oder um eine zu untersuchende, unbekannte Probe handelt. Es kann z.B. beim Einbringen der Probenflüssigkeiten in die Probengefäße 16 das Probengefäß nur zu einem Drittel gefüllt werden, wenn es sich um eine zu untersuchende Probe handelt, oder ganz gefüllt werden, wenn die Probenflüssigkeit eine Eichlösung ist. Wenn dann die Sensoranordnung beim ersten Eintauchen in ein Probengefäß ein voll gefülltes Probengefäß feststellt, dann "weiß" das Gerät, daß es sich um eine Eichlösung handelt. In diesem Sinne wird dann die betreffende Position in einem Speicher 50 markiert. Das Gerät wird eine Probenflüssigkeit aus diesem Gefäß auch später als Eichlösung betrachten, wenn der Flüssigkeitsspiegel durch Entnahme von Probenflüssigkeit anschließend stark abgesunken ist. Es ist dann nicht erforderlich, die Positionen der zu untersuchenden Proben und der Eichlösungen über eine Tastatur einzugeben, was zu Fehlern führen könnte.

Die beschriebene Lösung, die einen auf die Reflexe der Oberfläche der Probenflüssigkeit der ansprechenden Sensor benutzt, erscheint derzeit als optimal. Es zeigt sich, daß diese Reflexe unabhängig von der Art der Flüssigkeit für diese Zwecke ausreichen.

## Ansprüche

1. Steuervorrichtung zur Steuerung der Absenkbewegung eines Ansaugrohres (10) in ein mit einer Probenflüssigkeit gefülltes Probengefäß (16) bei automatischen Probengebern, bei welcher

(a) das Ansaugrohr durch einen Stellantrieb (12) in das Probengefäß (16) absenkbar ist,

(b) längs des Ansaugrohres (10) lichtleitende Mittel (32) vorgesehen sind,

(c) ein Lichtsender (28) und ein Lichtempfänger (30) vorgesehen sind, wobei durch die lichtleitenden Mittel (32) Licht von dem Lichtsender zu dem probenflüssigkeitsseitigen, unteren Ende (34) des Ansaugrohres (10) geleitet wird, wo das Licht in Richtung auf die Oberfläche (98) der Probenflüssigkeit austritt, und von der Oberfläche (98) der Probenflüssigkeit reflektiertes Licht durch die lichtleitenden Mittel (32) zu dem photoelektrischen Empfänger (30) geleitet wird,

**dadurch gekennzeichnet, daß**

(d) die lichtleitenden Mittel von einem einzigen Lichtleiter (10A, 32) gebildet sind, in welchen das Licht von dem Lichtsender (28) in Richtung zu dem unteren Ende (34) des Ansaugrohres (10) hin einkoppelbar ist und aus welchem von dem unteren Ende (34) des Ansaugrohres (10) her zurücklaufendes, an der Oberfläche (98) der Probenflüssigkeit reflektiertes Licht zu dem photoelektrischen Empfänger (30) hin auskoppelbar ist.

2. Steuervorrichtung nach Anspruch 1, **dadurch gekennzeichnet, daß** der Lichtsender (28) und der photoelektrische Empfänger (30) am oberen Ende (38) des Ansaugrohres (10) angeordnet und über flexible elektrische Leitungen (42, 46) mit einer Sensorschaltung (44) verbunden sind.

3. Steuervorrichtung nach Anspruch 1 oder 2, **dadurch gekennzeichnet, daß** das Licht durch einen teildurchlässigen Spiegel (104) ein- und auskoppelbar ist.

4. Steuervorrichtung nach einem der Ansprüche 1 bis 3, **dadurch gekennzeichnet, daß** das Ansaugrohr (10A) selbst als Lichtleiter ausgebildet ist.

5. Steuervorrichtung nach einem der Ansprüche 1 bis 4, **dadurch gekennzeichnet, daß**

(a) die Steuerelektronik (48) ein Wegsignal (124) für den Weg des Ansaugrohres (10A) bis zum Erreichen der Flüssigkeitsoberfläche (98) liefert,

(b) beim ersten Eintauchen des Ansaugrohres (10A) in das Probengefäß (16) das Wegsignal (124) in Größenklassen klassifiziert wird, wobei jeder Größenklasse ein Typ von Probenflüssigkeit (zu messende Probe oder Eichlösung) zugeordnet ist, und

(c) ein diesen Typ repräsentierendes Signal in Zuordnung zu den betreffenden Probengefäß (16) auf einen Speicher (50) aufgeschaltet ist, derart, daß bei nachfolgenden Probenahmen aus dem Probengefäß (16) der Typ der Probenflüssigkeit zusammen mit den jeweiligen Meßwerten des Analysengerätes (20) bei der Signalverarbeitung dieser Meßwerte berücksichtigt wird.

Fig. 1

Fig. 2

Fig. 3

○ —110

Ansaugrohr
ab —112

max.
Tiefe ? —114

nein

ja — Meldung:
Probengefäß
leer —116

122 —

118 —

Sensor? —120

nein

ja

Meldung:
Flüssigkeit
erreicht bei
Tiefe x —124

Ansaugrohr
126 — um 2mm
absenken

130 —

Abhängig vom
Probenverbrauch
Ansaugrohr kontinuierlich absenken

128 —

Fig. 4

**Europäisches Patentamt**

# EUROPÄISCHER RECHERCHENBERICHT

**EP 90118558.7**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁹) |
|---|---|---|---|
| D,Y | DE - C2 - 3 113 248 (EPPENDORF) * Gesamt * | 1-3 | G 01 F 23/22// G 01 N 35/06 |
| A | -- | 4 | |
| Y | DE - A1 - 3 235 591 (FRAUNHOFER-GESELLSCHAFT) * Fig. 1 * | 1-3 | |
| D,A | DE - C2 - 3 219 251 (OLYMPUS) * Spalte 3, Zeile 50 - Spalte 5, Zeile 17 * | 5 | |
| D,A | EP - A1 - 0 250 671 (TOYO SODA) * Zusammenfassung; Anspruch 8; Fig.; Spalte 6, Zeilen 50 -52 * | 1-5 | |
| D,A | DE - C2 - 3 149 211 (OLYMPUS) * Ansprüche; Fig. * ---- | 1-5 | RECHERCHIERTE SACHGEBIETE (Int. Cl.⁹) G 01 F G 01 N B 67 D |

Der vorliegende Recherchenbericht wurde für alle Patentansprüche erstellt.

| Recherchenort WIEN | Abschlußdatum der Recherche 18-01-1991 | Prüfer NARDAI |
|---|---|---|